# EUROPÄISCHE PATENTANMELDUNG

(11) **EP 3 960 447 A1**
(43) Veröffentlichungstag der Anmeldung: **02.03.2022**
(21) Anmeldenummer: 21189598.2
(22) Anmeldetag: 04.08.2021
(51) Int. Cl.: B32B 27/12, B32B 1/08, B32B 3/08, B32B 5/02, B32B 7/12, B32B 25/08, B32B 25/20, B32B 27/08, B32B 27/32, B32B 27/36, A22C 13/00

(54) **NAHRUNGSMITTELHÜLLE**

(30) Priorität: 01.09.2020 DE 102020122855
(71) Anmelder: World Pac International AG, 9496 Balzers (LI)
(72) Erfinder:
(74) Vertreter: Lemcke, Brommer & Partner Patentanwälte Partnerschaft mbB

(57) **Zusammenfassung**

Die Erfindung betrifft eine Nahrungsmittel-Barrierehülle für Lebensmittel, die in der Hülle gebrüht, gekocht oder auf andere Weise erhitzt werden, insbesondere für Koch- oder Brühwürste, Schinken, Pökelwaren, Fisch oder Schmelzkäse, wobei die Hülle aus zumindest einer wasserdampf- und/oder gasundurchlässigen Folie (1) besteht und eine mit ihr verbundene saugfähige Innenlage (2) aus Einzelfasern oder einem Gewebe, Gewirke, Gestricke, vorzugsweise aus einem Vlies, trägt und diese Innenlage (2) mit Farb- und/oder Aromastoffen getränkt ist. Wesentlich dabei ist, dass die Außenseite der Barrierehülle überwiegend aus einer Polyesterfolie (1a) aus Polyethylenterephthalat besteht und diese Polyesterfolie (1a) durch eine Verbindungsschicht (1b) mit der saugfähigen Innenlage (2) verbunden ist.

## Beschreibung

Die Erfindung betrifft eine Nahrungsmittel-Barrierehülle für Lebensmittel, die in der Hülle gebrüht, gekocht oder auf andere Weise erhitzt werden, insbesondere für Koch- oder Brühwürste, Schinken, Pökelwaren, Fisch oder Schmelzkäse, wobei die Hülle aus zumindest einer wasserdampf- und/oder gasundurchlässigen Folie besteht, die eine mit ihr verbundene saugfähige Innenlage aus Einzelfasern oder einem Gewebe, Gewirk, Gestricke, vorzugsweise aus einem Vlies, trägt, wobei diese Innenlage mit Farb- und/oder Aromastoffen getränkt ist.

Eine derartige Barrierehülle ist durch die EP 0 992 194 B1 bekannt. Sie ist seit vielen Jahren in der Bauweise gemäß Figur 1 der EP 0 992 194 B1 im Handel, das heißt, dass die saugfähige Innenlage von einer Polyethylenlage, einer Polyamid-Zwischenlage und einer Polyethylen-Außenlage umgeben ist.

Untersuchungen der Anmelderin haben nun ergeben, dass diese Barrierehülle unter rauen Betriebsbedingungen, insbesondere, wenn sie mit scharfkantigen Gegenständen in Kontakt kommt, lokal beschädigt werden kann. Die lokale Beschädigung kann dazu führen, dass die Hülle beim Kochvorgang, wenn das eingefüllte Brät oder dergleichen expandiert, aufreißt. Dieses Aufreißen ist überraschend, weil die Hülle an sich durch ihren mehrlagigen Aufbau eine hohe Stabilität aufweist.

Der vorliegenden Erfindung liegt nun die Aufgabe zugrunde, eine Barrierehülle der eingangs beschriebenen Art hinsichtlich ihrer Stabilität zu verbessern, insbesondere ein lokales Aufreißen zu verhindern.

Diese Aufgabe wird erfindungsgemäß dadurch gelöst, dass die Außenseite der Barrierehülle aus einer Folie mit mindestens 50%, vorzugsweise mindestens 70%, insbesondere mindestens 80% Polyester in Form von Polyethylenterephthalat besteht und diese Polyesterfolie durch eine Verbindungsschicht mit der saugfähigen Innenlage verbunden ist.

Es hat sich überraschend gezeigt, dass der Ersatz der Polyamidfolie und der beiden sie umgebenden Polyethylenfolien durch eine zumindest überwiegend aus Polyethylenterephthalat bestehenden Folie ein Reißen der Barrierehülle unter rauhen Arbeitsbedingungen zuverlässig verhindert, selbst dann, wenn das eingefüllte Lebensmittel erhitzt wird und stark expandiert.

Nicht zuletzt bietet der Verzicht auf die Polyamidfolie und auf eine der beiden Polyethylenfolien erhebliche Kostenvorteile.

Zwar ist durch die DE 102 44 088 A1 bereits eine Verpackungshülle mit ähnlichen Transfereigenschaften bekannt geworden. Dabei sind die zu transferierenden Aromastoffe aber in einem pulverförmigen Füllstoff untergebracht, der seinerseits in einer Polymer-Matrix der Innenlage eingebettet ist. Die genannte Schrift gibt keine Hinweise auf eine unmittelbar saugfähige Innenlage ohne pulverförmigen Füllstoff und stattdessen aus Einzelfasern oder einem Gewebe, Gewirk, Gestricke oder Vlies.

Des weiteren ist durch die EP 0 986 957 A1 eine ähnliche Verpackungshülle mit Aromastoffen in der Innenlage bekannt geworden. Dabei werden die Aromastoffe durch ein Bindemittel aus Polysaccharid oder Protein an der Innenlage gehalten. Das gleiche Bindemittel dient auch zur Verbindung der Innenlage mit einer Polyester-Außenlage. Es findet sich kein Hinweis, auf das Bindemittel in der Innenlage zu verzichten und stattdessen mit einer saugfähigen Innenlage zu arbeiten.

Die erfindungsgemäß eingesetzte zumindest überwiegend aus Polyester bestehende Folie wird in der vorliegenden Anmeldung der Einfachheit halber unabhängig von ihrem Polyesteranteil als Polyesterfolie bezeichnet.

Dabei wird als Polyester bevorzugt gestrecktes Polyethylenterephthalat, insbesondere biaxial gestrecktes Polyethylenterephthalat eingesetzt.

Die Polyesterfolie hat zweckmäßig eine Stärke von ca. 10 Mikrometer bis ca. 60 Mikrometer, vorzugsweise ca. 15 Mikrometer bis ca. 40 Mikrometer. Überraschend hat es sich gezeigt, dass diese geringe Wandstärke ausreicht, um der Barrierehülle auch unter rauen Betriebsbedingungen eine befriedigende Reißfestigkeit zu verleihen. Selbst dann, wenn die Hülle gestippt oder perforiert werden soll, ist kein von den Löchern ausgehendes Weiterreisen zu befürchten. Dieses Stippen/Perforieren hat bei bestimmten Produkten den Vorteil, einen kontrollierten Gewichtsverlust des eingefüllten Lebensmittels herbeizuführen.

Für die Verbindung der saugfähigen Innenlage mit der Polyesterfolie bieten sich dem Fachmann verschiedene Möglichkeiten. Zum einen kann eine Verbindungsschicht aus Klebstoff, insbesondere Silikonkautschuk oder aus Zweikomponenten-Epoxidharz gewählt werden. Zum anderen kann die Verbindungsschicht aus einer Polyethylenlage bestehen.

Die letztgenannte Alternative hat sich bei Versuchen besonders bewährt. Dabei wird die Polyethylenlage zweckmäßig nass/pastös auf die Polyesterlage aufextrudiert, sodass sie als Kleber für die unmittelbar anschließend aufzubringende saugfähige Innenlage fungiert.

Die saugfähige Innenlage besteht aus Baumwollfasern, Zellulosefasern, insbesondere regenerierten Zellulosefasern, Viskosefasern oder Mischungen hiervon, wie an sich bekannt.

Dabei liegt es im Rahmen der Erfindung, die Verklebung der saugfähigen Innenlage mit der Polyethylen-Zwischenschicht dadurch zu begünstigen, dass die Innenlage zusätzlich von Polyethylenfasern durchsetzt ist.

Im Allgemeinen liegt die Verpackungshülle nach dem Auflaminieren der saugfähigen Innenlage in Form einer Flachfolie vor, die anschließend in Schlauchform gebracht wird. Dabei können die in Schlauchlängsrichtung verlaufenden Ränder längs einer schmalen Überlappungszone durch Verkleben oder Verschweißen miteinander verbunden werden

Alternativ können die Ränder ohne Überlappung nebeneinanderliegen und durch ein in Schlauchlängsrichtung laufendes, die Ränder überlappendes Band an der Außenseite der Polyesterfolie verbunden werden. Das genannte, die nebeneinanderliegenden Ränder verbindende Band an der Außenseite der Polyesterfolie besteht vorzugsweise aus Silikonkautschuk oder aus Polyethylen. Es kann durch Heißsiegelung mit der Polyesterlage verbunden werden.

Weitere Merkmale und Vorteile der Erfindung ergeben sich aus der nachfolgenden Beschreibung eines Ausführungsbeispiels anhand der Zeichnung, dabei zeigt
- Figur 1: einen Querschnitt durch das Hüll-Material und
- Figur 2: einen Querschnitt an der Stoßstelle.

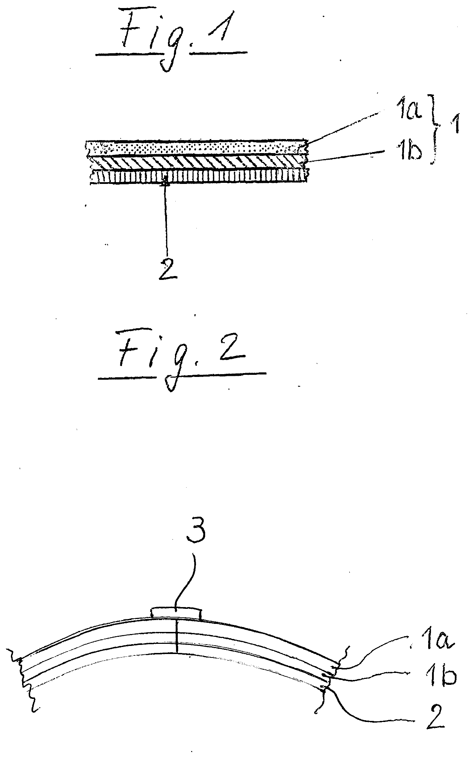

Gemäß Figur 1 weist die Verpackungshülle außen eine Barrierehülle 1 und innen eine saugfähige Innenlage 2 auf.

Die Barrierehülle 1 besteht aus einer äußeren Polyesterlage 1a aus biaxial gestrecktem Polyethylenterephthalat und aus einer als Verbindungsschicht zur Innenlage 2 fungierenden Polyethylenlage 1b. Die beiden Lagen 1a und 1b haben die Aufgabe, das eingefüllte Lebensmittel und die Aroma- oder Farbstoffe der saugfähigen Innenlage gasdicht, insbesondere gegenüber Wasserdampf und Sauerstoff abzuschirmen, damit es beim Koch- oder Brühprozess nicht ausgelaugt wird, also nicht an Aroma oder Farbe verliert. Außerdem wird dadurch ein Gewichtsverlust während des Fertigungsprozesses, der Lagerung oder dem Transport zuverlässig verhindert.

Die saugfähige Innenlage 2, etwa ein Vlies aus Zellulosefasern, dient als Träger für die gewünschten Farb- und/oder Aromastoffe. Dabei kann es sich um Zuckercouleur, Gewürzextrakte, Rauchbestandteile, Flüssigrauch, Marinaden, Fruchtaromen und andere lebensmittelrechtlich zugelassene Stoffe handeln. Sie können kontinuierlich auf die saugfähige Innenlage 2 aufgebracht werden, entweder durch ein Sprührohr, an dem die zum Schlauch geformte Verpackungshülle entlanggeführt wird oder durch ein Flüssigkeitsbad, in welches die Innenlage eintaucht, oder mittels einer Flüssigkeitsblase, durch welche die Hülle hindurchgeführt wird.

Stattdessen kann die Innenlage 2 aber auch, insbesondere in flacher Form, mit den gewünschten Farb- und/oder Aromastoffen bedruckt werden.

Nach dem Trocknen wird die Verpackungshülle in Schlauchform gebracht und mittels schweißfähigem, hitzebeständigem Klebeband oder durch Heißverschweißung an den auf Stoß aneinanderliegenden Längsrändern verbunden.

Die imprägnierte Verpackungshülle kann sowohl im feuchten als auch im getrockneten Zustand verwendet und verarbeitet werden.

Alle vorstehenden Materiallagen 1a, 1b und 2 sind zu einem Film laminiert. Seine Dicke liegt meist unter 1/10 mm, vorzugsweise zwischen ca. 70 Mikrometer und ca. 90 Mikrometer. Die Dicke der Polyesterlage 1a liegt bei etwa 20 Mikrometer, ebenso die Dicke der Zwischenlage 1b aus Polyethylen.

Die Polyethylenlage 1b wird zweckmäßig nass auf die Polyesterlage 1a aufextrudiert, sodass sie als Kleber für die anschließend aufgebrachte saugfähige Innenlage 2 fungiert.

Für die Innenlage 2 empfiehlt es sich, das absorbierende Material, also das Vlies, die Fasern oder dergleichen in einer Materialstärke von 10 bis etwa 50 g/m² aufzutragen. Anschließend wird diese absorbierende Lage mit den gewünschten Aromastoffen oder Farbträgern imprägniert und gegebenenfalls in die vom Kunden gewünschte Form gebracht und konfektioniert.

Meist wird die Verpackungshülle in Schlauchform ausgeliefert. Dabei werden die ohne Überlappung aneinander liegenden Längsränder der Hülle durch ein beide Längsränder überdeckendes Klebeband 3 miteinander verbunden, wie Fig. 2 zeigt.

Das Klebeband 3 besteht aus Silikonkautschuk oder Polyethylen. Es hat eine Breite von wenigen Millimetern.

Nach dem Einbringen des Nahrungsmittels in die schlauchförmige Verpackungshülle erfolgt dann in üblicher Weise der Verschluss an den Wurstenden und die Vereinzelung der Würste.

Zusammenfassend zeichnet sich die erfindungsgemäße Verpackungshülle dadurch aus, dass mit wenigen Lagen eine gute Barriereeigenschaft mit hoher Reißfestigkeit erzielt wird.

## Patentansprüche

1. Nahrungsmittel-Barrierehülle für Lebensmittel, die in der Hülle gebrüht, gekocht oder auf andere Weise erhitzt werden, insbesondere für Koch- oder Brühwürste, Schinken, Pökelwaren, Fisch oder Schmelzkäse, wobei die Hülle aus zumindest einer wasserdampf- und/oder gasundurchlässigen Folie (1) besteht und eine mit ihr verbundene saugfähige Innenlage (2) aus Einzelfasern oder einem Gewebe, Gewirke, Gestricke, vorzugsweise aus einem Vlies, trägt und diese Innenlage (2) mit Farb- und/oder Aromastoffen getränkt ist,
**dadurch gekennzeichnet, dass**
die Außenseite der Barrierehülle aus einer Folie (1a) mit mindestens 50%, vorzugsweise mindestens 70%, insbesondere mindestens 80% Polyester in Form von Polyethylenterephthalat besteht und diese Polyesterfolie (1a) durch eine Verbindungsschicht (1b) mit der saugfähigen Innenlage (2) verbunden ist.

2. Barrierehülle nach Anspruch 1, **dadurch gekennzeichnet, dass** gestrecktes Polyethylenterephthalat, vorzugsweise biaxial gestrecktes Polyethylenterephthalat, eingesetzt wird.

3. Barrierehülle nach Anspruch 1, **dadurch gekennzeichnet, dass** die Polyesterfolie eine Stärke von ca. 10 Mikrometer bis ca. 60 Mikrometer, vorzugsweise ca. 15 Mikrometer bis ca. 40 Mikrometer aufweist.

4. Barrierehülle nach Anspruch 1, **dadurch gekennzeichnet, dass** die Verbindungsschicht (1b) aus Klebstoff, insbesondere Silikonkautschuk oder aus Zweikomponenten-Epoxidharz-Klebstoff besteht.

5. Barrierehülle nach Anspruch 1, **dadurch gekennzeichnet, dass** die Verbindungsschicht (1b) aus einer Polyethylenlage besteht.

6. Barrierehülle nach Anspruch 5, **dadurch gekennzeichnet, dass** die Polyethylenlage (1b) durch Extrusion mit der Polyesterfolie (1a) verbunden ist.

7. Barrierehülle nach Anspruch 5, **dadurch gekennzeichnet, dass** die saugfähige Innenlage (2) durch Laminierung mit der Polyethylenlage (1b) verbunden ist.

8. Barrierehülle nach Anspruch 1, **dadurch gekennzeichnet, dass** die Innenlage (2) aus Baumwollfasern, Zellulosefasern, insbesondere regenerierten Zellulosefasern, Viskosefasern oder Mischungen hiervon besteht.

9. Barrierehülle nach Anspruch 1, **dadurch gekennzeichnet, dass** die Innenlage (2) von Polyethylenfasern durchsetzt ist und diese Fasern mit der Verbindungsschicht (1b) verbunden sind.

10. Barrierehülle nach einem der vorhergehenden Ansprüche, **dadurch gekennzeichnet, dass** sie aus einer in Schlauchform gebrachten Flachfolie besteht, deren in Schlauchlängsrichtung verlaufende Ränder überlappend aneinander liegen und durch ein in Schlauchlängsrichtung laufendes, die Ränder überlappendes Band (3) an der Außenseite der Polyesterfolie (1a) verbunden sind.

11. Barrierehülle nach Anspruch 10, **dadurch gekennzeichnet, dass** das Band (3) aus Silikonkautschuk oder Polyethylen besteht.

12. Barrierehülle nach Anspruch 10 oder 11, **dadurch gekennzeichnet, dass** das Band (3) durch Heißsiegelung mit der Polyesterfolie (1a) verbunden ist.
